# FASCICULE DE BREVET EUROPEEN

(11) **EP 1 054 515 B1**
(45) Date de publication et mention de la délivrance du brevet: **03.09.2008**
(21) Numéro de dépôt: 00401339.7
(22) Date de dépôt: 16.05.2000
(51) Int. Cl.: H04B 1/10, H04B 17/00

(54) **Procédé et dispositif de transmission radioélectrique de signaux, en particulier de signaux sonores**
Verfahren und Vorrichting zur Funkübertragung von Signalen, insbesondere von Audiosignalen
Method and system for transmission or radio signals, and in particular audio signals

(30) Priorité: 17.05.1999 FR 9906222; 08.07.1999 FR 9908876
(43) Date de publication de la demande: 22.11.2000
(73) Titulaire: ATRAL, F-38190 Crolles (FR)
(72) Inventeur: Nauleau, Alain, 38190 Bernin (FR)
(74) Mandataire: Casalonga, Axel

(56) Documents cités:
- GB-A- 2 024 569
- US-A- 5 265 128
- US-A- 5 799 242

## Description

La présente invention concerne un procédé et un dispositif de transmission radioélectrique de signaux d'origine, en particulier de signaux sonores entre deux dispositifs d'émission-réception communiquant par voie hertzienne, notamment dans le domaine de la téléphonie ou de l'interphonie.

On connaît des dispositifs téléphoniques qui effectuent des recherches parmi des canaux de transmission radioélectrique de façon à effectuer la prise de ligne sur le canal le moins perturbé ou saturé, par exemple en détectant le signal RSSI (intensité du champ radioélectrique dans le canal testé, afin d'éviter de débuter la communication téléphonique sur un canal perturbé.

Malheureusement, lorsque la communication est établie sur un canal radioélectrique déterminé, il peut arriver que ce canal radioélectrique soit perturbé par des signaux extérieurs de telle sorte que la conversation devient inaudible pour les utilisateurs, ces derniers n'ayant pas d'autre solution que d'interrompre leur conversation et de couper la communication, à moins que les dispositifs téléphoniques qu'ils utilisent disposent d'une touche de changement de canal. Dans ce cas, les utilisateurs peuvent provoquer manuellement un changement du canal de transmission afin de pouvoir poursuivre leur conversation sur un autre canal. Cette opération nuit cependant au confort des utilisateurs de tels appareils.

Par ailleurs, le brevet GB-A-2 024 569 décrit un système de communication dans lequel le changement de canal de communication peut se produire de façon automatique, mais uniquement si le canal utilisé n'est pas trop perturbé.

La présente invention a pour but de proposer un procédé et un dispositif de transmission radioélectrique de signaux d'origine tels que des signaux sonores, adaptés pour que les signaux d'origine puissent être transmis même si l'espace radioélectrique est perturbé, du moins en partie.

La présente invention a tout d'abord pour objet un procédé d'échange de signaux d'origine ou en bande de base, en particulier des signaux audio ou sonores, entre un premier dispositif (A1) d'émission et de réception et un second dispositif (A2) d'émission et de réception, dans lequel le premier dispositif (A1) comprend un moyen d'activation d'un signal d'appel.

Selon l'invention, le premier dispositif (A1) est apte à émettre des signaux sélectivement dans une première série de canaux de transmission radioélectrique (Un) et au moins un autre canal prédéterminé (Ua) et à recevoir des signaux sélectivement dans une seconde série de canaux de transmission radioélectrique (Vm) et le second dispositif (A2) est apte à émettre des signaux sélectivement dans ladite seconde série de canaux (Vm) et à recevoir des signaux sélectivement dans ladite première série de canaux (Un) et dans ledit canal prédéterminé (Ua).

Selon l'invention, le premier dispositif (A1), après avoir été activé par ledit moyen d'activation mesure l'intensité du champ électromagnétique dans les canaux de ladite seconde série de canaux (Vm), compare les valeurs de ces intensités, sélectionne le premier canal (Vx) dans lequel la valeur du champ électromagnétique est la plus faible, installe son récepteur sur ce premier canal de transmission (Vx), et émet respectivement dans lesdits canaux prédéterminés (Ua, Ub) un premier signal de sélection (Sp) comprenant ledit signal d'appel et un signal représentatif dudit premier canal sélectionné (Vx).

Selon l'invention, le second dispositif (A2) scrute ledit canal prédéterminé (Ua) et, après réception dudit premier signal de sélection (Sp), installe son émetteur sur ledit premier canal sélectionné (Vx), mesure l'intensité du champ électromagnétique dans les canaux de ladite première série de canaux (Un), compare les valeurs de ces intensités, sélectionne le second canal (Uy) dans lequel la valeur du champ électromagnétique est la plus faible et installe son récepteur sur ce canal sélectionné, et émet dans ledit canal radioélectrique sélectionné (Vx) un second signal de sélection (Sq) représentatif dudit second canal sélectionné (Uy).

Selon l'invention, le premier dispositif (A1) scrute les canaux de ladite seconde série de canaux (Vm) et, après réception dudit second signal de sélection (Sq), installe son émetteur sur ledit second canal sélectionné (Uy).

Après quoi, selon l'invention, les dispositifs (A1, A2) se transmettent entre eux lesdits signaux d'origine sur lesdits canaux sélectionnés (Vx, Uy).

Selon l'invention, le premier dispositif (A1) est de préférence apte à émettre ledit premier signal de sélection sur deux autres canaux (Ua, Ub) et le second dispositif est de préférence apte à revoir ce premier signal de sélection sur ces deux autres canaux.

Selon l'invention, lesdits dispositifs effectuent de préférence lesdites opérations après avoir été activés par un moyen d'activation.

Selon un autre objet de l'invention, pour la transmission de signaux d'origine du premier dispositif au second dispositif, respectivement du second dispositif au premier dispositif , le premier dispositif, respectivement le second dispositif, génère un signal de service de forme déterminée dans une seconde bande de fréquence au moins en partie disjointe de ladite première bande, combine, en particulier par addition, lesdits signaux d'origine avec ledit signal de service, et émet le signal mélangé dans ledit canal sélectionné.

Selon l'invention, le second dispositif, respectivement le premier dispositif, démodule les signaux reçus dans ce canal sélectionné (Uy) et filtre les signaux démodulés de façon à en extraire un signal principal contenu dans ladite première bande de fréquence pour le délivrer et à en extraire un signal secondaire contenu dans ladite seconde bande de fréquence, compare ce signal secondaire à un signal de référence (Sr) correspondant audit signal de service (Ss) et génère un ordre de sélection au cas où ledit signal secondaire est au moins en partie différent dudit signal de référence (Sr).

Selon l'invention, sous l'effet dudit ordre de sélection, ledit second dispositif, respectivement le premier dispositif, sélectionne un autre canal de ladite première série de canaux (Un), installe son récepteur sur cet autre canal et transmet un signal de changement représentatif de cet autre canal.

Selon l'invention, ledit premier dispositif, respectivement le second dispositif, recevant ce signal de changement, installe son émetteur sur cet autre canal nouvellement sélectionné de façon à émettre alors ledit signal mélangé sur cet autre canal.

Selon la présente invention, lesdites première et seconde bandes de fréquence sont de préférence séparées.

Le procédé selon la présente invention peut en outre avantageusement consister à mesurer l'intensité du champ électromagnétique dans au moins certains desdits canaux de transmission radioélectrique, à comparer les valeurs de ces intensités, et à sélectionner en tant qu'autre canal de transmission radioélectrique celui dont la valeur du champ électromagnétique est la plus faible.

Selon une exécution de la présente invention, lesdit signaux d'origine peuvent être des signaux audio et ledit signal de service peut être un signal subsonique.

Le procédé selon la présente invention consiste, de préférence, à délivrer ledit ordre de sélection au cas où ledit signal secondaire est au moins en partie différent dudit signal de référence (Sr) pendant une durée prédéterminée.

Selon la présente invention, ledit signal de service est de préférence un signal périodique, en particulier sinusoïdal.

Un autre objet de la présente invention concerne un système de transmission de signaux d'origine, en particulier des signaux audio ou sonores, générés dans une première bande de fréquence, entre un premier dispositif d'émission et de réception de signaux radioélectriques et un second dispositif d'émission et de réception de signaux radioélectriques.

Selon la présente invention, les dispositifs d'émission et de réception comprennent respectivement des moyens pour émettre des signaux dans respectivement plusieurs canaux de transmission radioélectrique, des moyens pour recevoir des signaux dans respectivement lesdits canaux de transmission radioélectrique, des moyens pour sélectionner un canal d'émission et un canal de réception différents, correspondant à deux canaux de transmission radioélectrique différents entre les dispositifs d'émission et de réception, des moyens pour générer dans une seconde bande de fréquence au moins en partie disjointe de ladite première bande de fréquence un signal de service de forme déterminée, des moyens pour combiner les signaux d'origine avec ledit signal de service et délivrer le signal mélangé à transmettre auxdits moyens d'émission, des moyens pour démoduler les signaux reçus par lesdits moyens de réception, des moyens pour filtrer les signaux démodulés de façon à en extraire un signal principal contenu dans ladite bande de fréquence pour le restituer à l'utilisateur et à en extraire un signal secondaire contenu dans ladite seconde bande de fréquence, des moyens pour comparer le signal secondaire à un signal de référence (Sr) correspondant audit signal de service, et des moyens pour délivrer un ordre de sélection de canal de transmission auxdits moyens de sélection au cas où ledit signal secondaire est au moins en partie différent dudit signal de référence (Sr).

Le système selon la présente invention comprend de préférence des moyens pour mesurer l'intensité du champ électromagnétique dans au moins certains desdits canaux de transmission radioélectrique, des moyens pour comparer les valeurs de ces intensités et délivrer un ordre de sélection du canal de transmission dont la valeur du champ électromagnétique est la plus faible.

Selon la présente invention, le système peut avantageusement comprendre un microphone relié auxdits moyens de mélangeage et un haut-parleur relié auxdits moyens de filtrage pour restituer ledit signal principal en vue d'établir des communications téléphoniques entre les dispositifs précités.

Selon la présente invention, le système peut avantageusement comprendre des moyens pour délivrer un ordre de sélection de canal de transmission auxdits moyens de sélection au cas où ledit signal secondaire est différent dudit signal de référence (Sr) selon un écart déterminé et pendant une durée déterminée.

La présente invention sera mieux comprise à l'étude d'un dispositif téléphonique, susceptible de communiquer avec un dispositif téléphonique identique pour constituer un système de transmission téléphonique de signaux d'origine sonores, décrit à titre d'exemple non limitatif et illustré par le dessin sur lequel :
- la figure 1 représente un schéma électronique d'un dispositif téléphonique d'émission et de réception de signaux sonores selon la présente invention ;
- la figure 2 représente un relevé de signaux d'origine sonores ;
- la figure 3 représente un graphique d'un signal de service selon la présente invention ;
- la figure 4 représente un signal à transmettre issu des signaux des figures 2 et 3 ;
- et la figure 5 représente deux appareils selon l'invention, contenant le dispositif précité.

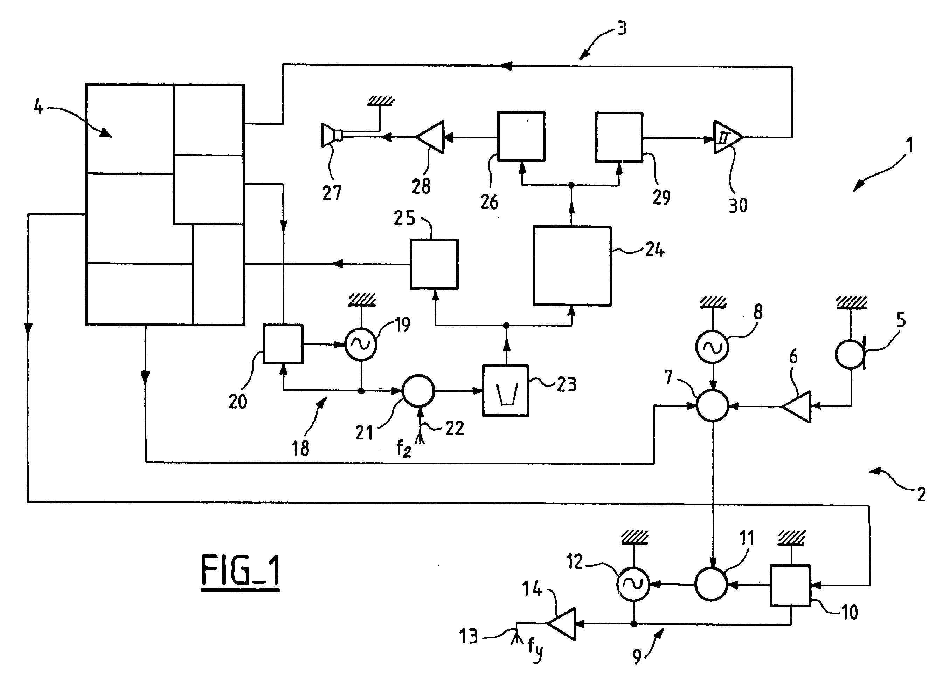

En se reportant à la figure 1, on voit qu'on a représenté, sous la forme d'un schéma électronique, un dispositif téléphonique d'émission et de réception, susceptible d'être installé dans un boîtier pour constituer un appareil téléphonique fixe ou portable.

Ce dispositif téléphonique 1 comprend un circuit d'émission 2 et un circuit 3 de réception 3, présentant en commun un micro-contrôleur 4.

Le circuit d'émission 2 comprend un microphone 5 captant la voix d'un utilisateur et délivrant des signaux d'origine correspondants, par l'intermédiaire d'un amplificateur 6, à un mélangeur basse fréquence 7, ou sommateur, dont une autre entrée est reliée à un générateur 8 très basse fréquence et dont une autre entrée est reliée à une sortie de commande du micro-contrôleur 4.

La sortie du mélangeur 7 est reliée à un émetteur 9 constitué par une boucle à verrouillage de phase ou boucle PLL commandée qui comprend un circuit 10 de comparaison de phase et de division de la fréquence d'un quartz intégré, dont le coefficient de division lui est délivré par le micro-contrôleur 4, un mélangeur 11, ou sommateur, mixant le signal issu du circuit de division 10 et le signal issu du mélangeur 7, ainsi qu'un oscillateur 12, le signal sortant de l'oscillateur 12 étant envoyé vers une antenne radioélectrique 13 au travers d'un amplificateur 14.

Cet émetteur 9 à boucle de verrouillage de phase ou PLL permet de générer un signal radioélectrique dans un canal de transmission déterminée dont la fréquence porteuse nominale, fixée par le micro-contrôleur 7, est modulée par le signal issu du mélangeur 7.

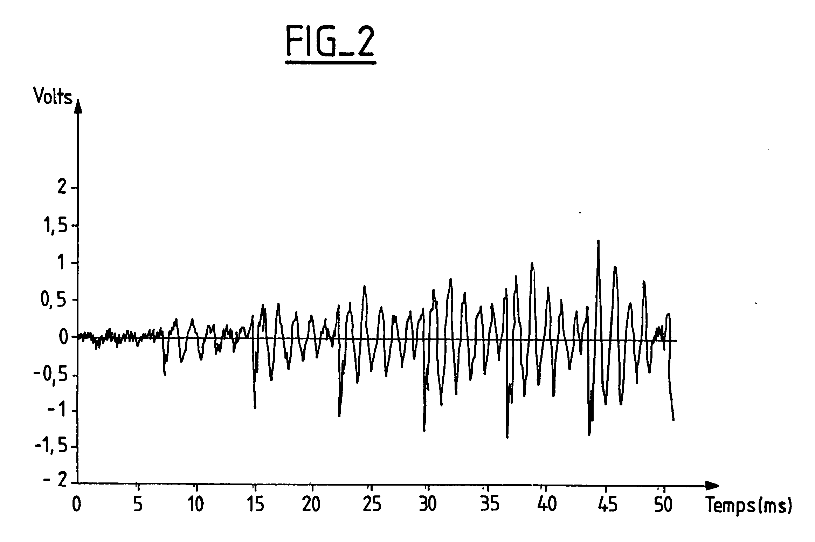

En se reportant à la figure 2, on voit qu'on a représenté un morceau d'un signal d'origine sonore 15 issu du microphone 4 et délivré au mélangeur 7, correspondant à une émission sonore ou voix d'un utilisateur du dispositif 1. Ce signal audio d'origine 15 est en général contenu dans une première bande de fréquence comprise par exemple entre trois cent hertz (300 Hz) et trois mille quatre cent hertz (3400 Hz).

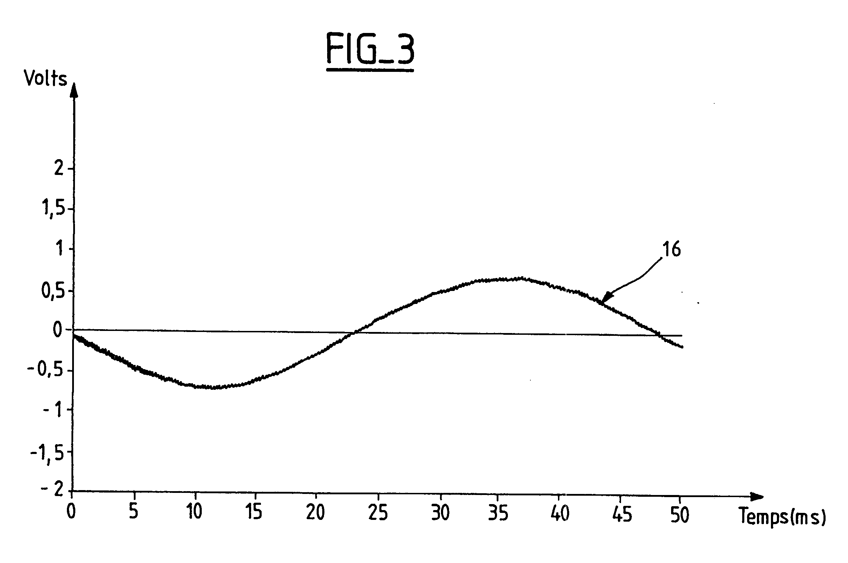

En se reportant à la figure 3, on voit qu'on a représenté un signal de service 16 susceptible d'être délivré par le générateur de signal 8 au mélangeur 7. Ce signal de service 16 est constitué dans cet exemple par une sinusoïde émise dans une seconde bande de fréquence de préférence disjointe de la bande de fréquence audio précitée, modulé par exemple à une fréquence infrasonique de vingt hertz (20 Hz).

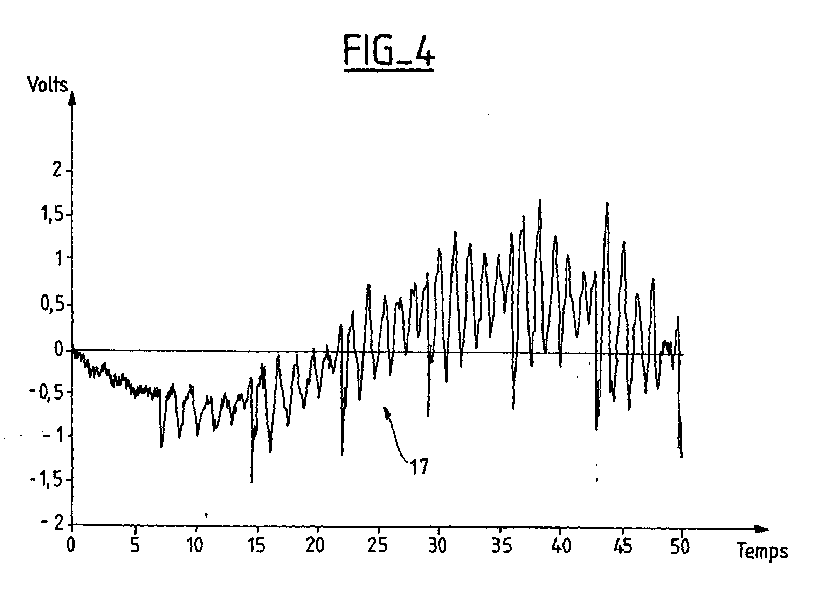

Sur la figure 4, on a représenté le signal mélangé 17, sortant du mélangeur 7 et correspondant au mixage ou à la somme du signal audio d'origine 15 et du signal de service 16.

Après avoir traversé l'émetteur 9 à boucle de verrouillage de phase ou PLL, ce signal mélangé 17 constitue le signal modulant la fréquence porteuse nominale correspondant au canal de transmission déterminé par le micro-contrôleur 4, de façon à constituer le signal radioélectrique émis par l'antenne 16.

Le circuit de réception 3 comprend un récepteur 18 à boucle de verrouillage de phase ou boucle PLL commandée qui est constitué par un oscillateur 19 et un circuit 20 de comparaison de phase et de division de la fréquence d'un quartz intégré, ce circuit 20 étant relié à une sortie de commande du micro-contrôleur qui fixe son coefficient de division, la sortie de l'oscillateur 19 étant reliée à une entrée d'un mélangeur 21 dont une autre entrée est reliée à une antenne radioélectrique 22 par laquelle le récepteur 18 peut capter des signaux radioélectriques.

Ainsi, le micro-contrôleur 4 fixe la fréquence porteuse nominale d'un canal de réception déterminé du récepteur 18, de signaux radioélectriques présents dans l'environement de l'antenne 22.

Le signal issu du mélangeur 21 est transmis, au travers d'un filtre 23 de fréquence intermédiaire, vers un démodulateur 24 et un circuit 25 de détection de signal RSSI (détection d'intensité de champ électromagnétique).

La sortie du démodulateur 24 est reliée d'une part à l'entrée d'un filtre de fréquence audio 26 qui extrait du signal issu du démodulateur 24 un signal principal audio situé dans une première bande de fréquence, correspondant de préférence à ladite première bande de fréquence du circuit d'émission 2, par exemple comprise entre trois cent hertz (300Hz) et trois mille quatre cent hertz (3400Hz). Ce signal audio est alors délivré, au travers d'un amplificateur 28, à un haut-parleur 27 de façon audible par l'utilisateur du dispositif 1.

Ladite sortie du démodulateur 24 est reliée d'autre part à un filtre très basse fréquence 29 qui extrait du signal issu du démodulateur 24 un signal secondaire contenu dans une seconde bande de fréquence, correspondant de préférence à ladite seconde bande de fréquence du circuit d'émission 2, par exemple de fréquence nominale égale à 20 hertz. Ce signal secondaire est alors délivré au micro-contrôleur 4 via une interface analogique-numérique 30.

Ainsi, un premier utilisateur d'un appareil téléphonique A1 contenant le dispositif 1 et un second utilisateur d'un second appareil A2 contenant un second dispositif 1 sont susceptibles d'entrer en communication vocale, par voie radioélectrique, dans la mesure où les micro-contrôleurs 4 de ces dispositifs établissent, d'une part entre l'émetteur 9 du premier appareil A1 et le récepteur 18 du second appareil A2, un canal de transmission radioélectrique présélectionné, constitué par une fréquence porteuse sur une fréquence porteuse fx, et, d'autre part entre l'émetteur 9 du second appareil A2 et le récepteur 18 du premier appareil A1, un canal de transmission radioélectrique présélectionné, constitué par une fréquence porteuse nominale fy.

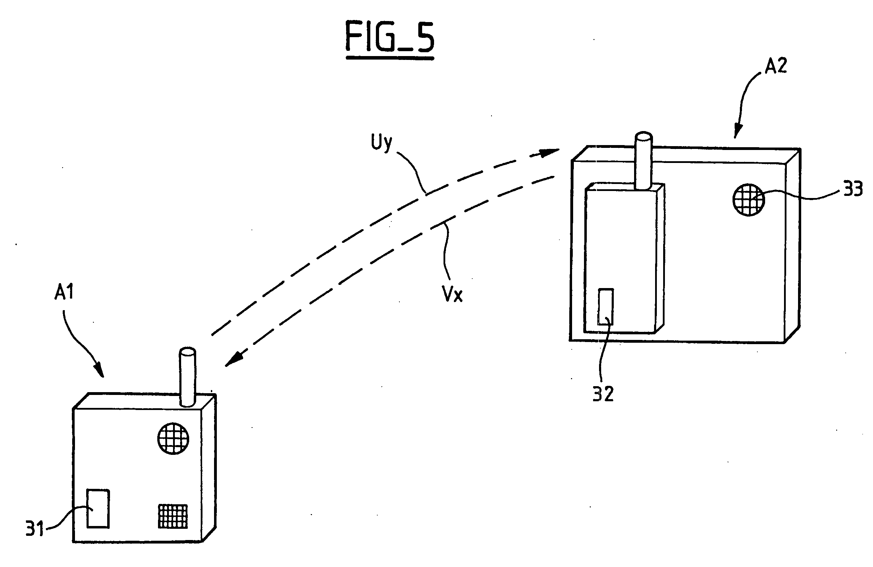

Selon une variante d'exécution représentée sur la figure 5, l'appareil A1 et l'appareil A2 peuvent constituer un système d'interphonie, dans lequel l'appareil A1, placé à l'extérieur d'une habitation, est muni d'un moyen d'activation constitué par un bouton d'appel 31 et l'appareil A2 est muni d'un bouton de prise de communication 32 et d'une sonnerie 33, cet appareil A2 se présentant par exemple sous la forme d'un combiné téléphonique avec ou sans fil.

Le premier dispositif A1 est apte à émettre des signaux sélectivement dans une première série Un de huit canaux de transmission radioélectrique U1-U8 et au moins deux autres canaux prédéterminés Ua et Ub et à recevoir des signaux sélectivement dans une seconde série Vm de deux canaux de transmission radioélectrique V1-V2.

En correspondance, le second dispositif A2 est apte à émettre des signaux sélectivement dans ladite seconde série de canaux Vm et à recevoir des signaux sélectivement dans ladite première série de canaux Un et dans lesdits canaux prédéterminés Ua et Ub.

Selon un exemple, les canaux de transmission Un, Ua et Ub peuvent être fixés dans un intervalle de fréquences compris entre quarante et quarante et un mégaHertz (40-41 MHz) et les canaux de transmission Vm peuvent être fixés dans un intervalle de fréquences compris entre vingt-six et vingt-sept mégaHertz (26-27 MHz).

Pour effectuer le choix des canaux de transmission, les dispositifs 1 des appareils A1 et A2 procèdent de la manière suivante.

Après qu'un utilisateur extérieur ait appuyé sur le bouton d'appel 31, l'appareil A1 mesure, en utilisant son circuit de détection de signal RSSI 25, l'intensité du champ électromagnétique dans les canaux de la seconde série de canaux Vm, compare les valeurs de ces intensités, et sélectionne le canal Vx dans lequel la valeur du champ électromagnétique est la plus faible.

Après quoi, l'appareil A1 installe son récepteur 3 sur ce canal de transmission sélectionné Vx et émet respectivement dans lesdits canaux prédéterminés Ua et Ub un premier signal de sélection Sp comprenant le signal d'appel et un signal représentatif du canal sélectionné Vx.

L'appareil A2 scrute lesdits canaux prédéterminés Ua et Ub et, après réception dudit premier signal de sélection Sp sur au moins l'un de ces canaux Ua et Ub, active la sonnerie 33.

Un utilisateur intérieur de l'appareil A2 ayant pris la communication en activant le bouton 32, manuellement ou en décrochant, l'appareil A2 installe son émetteur 2 sur ledit canal sélectionné Vx.

L'appareil A2 mesure, en utilisant son circuit de détection de signal RSSI 25, l'intensité du champ électromagnétique dans les canaux de ladite première série de canaux Um, compare les valeurs de ces intensités, et sélectionne le canal Uy dans lequel la valeur du champ électromagnétique est la plus faible, et émet dans ledit canal radioélectrique sélectionné Vx un second signal de sélection Sq représentatif dudit canal sélectionné Uy.

L'appareil A1 scrute les deux canaux de ladite seconde série de canaux Vm et, après réception dudit second signal de sélection Sq, installe son émetteur 9 sur ledit canal sélectionné Uy.

Ainsi calés l'un par rapport à l'autre, les appareils A1 et A2 sont prêts à se transmettre entre eux, sur lesdits canaux sélectionnés Uy, Vx, les signaux sonores respectivement captés par leurs microphones 5 et émis par leurs haut-parleurs 27, en particulier une conversation entre les utilisateurs précités de l'appareil extérieur A1 et de l'appareil intéreir A2.

Tout au long de la communication établie entre les appareils A1 et A2, le micro-contrôleur 4 de l'appareil A1 compare le signal secondaire issu de son filtre 29, via l'interface 30, à un signal sinusoïdal de référence Sr, correspondant au signal de service Ss contenu dans le signal issu de l'appareil A2.

Dans la mesure où le canal radioélectrique de communication établi de l'appareil A2 vers l'appareil A1 n'est pas perturbé, le signal secondaire issu du signal radioélectrique reçu par l'appareil A1 correspond dans sa forme audit signal sinusoïdal de référence Sr, par exemple celui de la figure 3. Le signal audio, contenu dans le signal radioélectrique reçu par l'appareil A1, est parfaitement restitué sur son haut-parleur 27 et est donc audible par son utilisateur

Si le signal secondaire issu du signal radioélectrique reçu par l'appareil A1 devient différent dans sa forme du signal sinusoïdal de référence Sr, cela signifie que le canal de transmission radioélectrique, présentement utilisé de l'appareil A2 vers l'appareil A1, est perturbé par des signaux extérieurs et qu'en conséquence le signal audio émis par le micro-phone 27 est perturbé, l'utilisateur ressentant bien entendu cette perturbation.

Si par exemple le microcontrôleur 4 de l'appareil A1 ne détecte pas un nombre prédéterminé de périodes du signal de service Ss, par exemple cinq, correspondant à une durée déterminée par exemple de 0,25 seconde, ce micro-contrôleur 4 génère un ordre de sélection de canal radioélectrique et le transmet d'une part à son récepteur 18 en modifiant le coefficient de division de son circuit 20 et d'autre part vers son circuit émetteur 2. A la réception de cet ordre de sélection sur son circuit de réception 9, l'appareil A2 change le canal d'émission de son émetteur 9 et le cale sur le nouveau canal de transmission sélectionné par l'appareil A1.

Comme lors d'une prise de canal, le micro-contrôleur 4 de l'appareil A1 choisit, de préférence, ce nouveau canal de transmission en utilisant les signaux délivrés par le circuit 25 de détection de signal RSSI 25.

Ainsi, la communication s'établit de l'utilisateur de l'appareil A2 vers l'utilisateur de l'appareil A1 sur ce nouveau canal de transmission radioélectrique, sans d'ailleurs que les utilisateurs ne s'en soient réellement aperçus.

Bien entendu, l'appareil A2 exécute les mêmes opérations que l'appareil A1 en ce qui concerne la sélection d'un canal de communication entre son émetteur 9 et le récepteur 18 de l'appareil A1.

A l'initiative de l'utilisateur de l'appareil A2, la communication entre les appareils A1 et A2 peut être coupée. Il lui suffit par exemple d'appuyer à nouveau sur le bouton 32 ou de racrocher le combiné.

Il résulte de ce qui précède que le dispositif 1 d'émission et de réception permet d'établir une communication entre deux utilisateurs sans que la restitution de la conversation de l'un vers l'autre ne soit perturbée de façon telle qu'elle deviendrait inaudible, et ce de telle manière que les utilisateurs ne ressentent quasiment pas les sélections et les changements de canaux de transmission.

Selon une variante et par symétrie, le second signal de sélection Sq pourraient être transmis depuis le second dispositif A2 vers le premier dispositif A1 sur au moins un canal prédéterminé de la série de canaux Vm ou sur au moins un autre canal prédéterminé indépendant.

La présente invention ne se limite pas à l'exemple ci-dessus décrit. En particulier, le signal de service pourrait présenter toute autre forme prédéterminée, en particulier un signal codé, et pourrait se situer sur une fréquence supersonique, proche cependant de celle du son.

## Revendications

1. Procédé d'échange de signaux d'origine ou en bande de base, en particulier des signaux audio ou sonores, entre un premier dispositif (A1) d'émission et de réception et un second dispositif (A2) d'émission et de réception, dans lequel le premier dispositif (A1) comprend un moyen d'activation d'un signal d'appel,
ce premier dispositif (A1) étant apte à émettre des signaux sélectivement dans une première série de canaux de transmission radioélectrique (Un) et au moins un autre canal prédéterminé (Ua) et à recevoir des signaux sélectivement dans une seconde série de canaux de transmission radioélectrique (Vm) et le second dispositif (A2) étant apte à émettre des signaux sélectivement dans ladite seconde série de canaux (Vm) et à recevoir des signaux sélectivement dans ladite première série de canaux (Un) et dans ledit canal prédéterminé (Ua)
le premier dispositif (A1), après avoir été activé par ledit moyen d'activation :
- mesure l'intensité du champ électromagnétique dans les canaux de ladite seconde série de canaux (Vm),
- compare les valeurs de ces intensités, sélectionne le premier canal (Vx) dans lequel la valeur du champ électromagnétique est la plus faible,
- installe son récepteur sur ce premier canal de transmission (Vx),
- et émet respectivement dans ledit canal prédéterminé (Ua) un premier signal de sélection (Sp) comprenant ledit signal d'appel et un signal représentatif dudit premier canal sélectionné (Vx),
le second dispositif (A2) scrute ledit canal prédéterminé (Ua) et, après réception dudit premier signal de sélection (Sp),
- installe son émetteur sur ledit premier canal sélectionné (Vx), mesure l'intensité du champ électromagnétique dans les canaux de ladite première série de canaux (Un),
- compare les valeurs de ces intensités,
- sélectionne le second canal (Uy) dans lequel la valeur du champ électromagnétique est la plus faible et installe son récepteur sur ce canal sélectionné (Uy),
- et émet dans ledit canal radioélectrique sélectionné (Vx) un second signal de sélection (Sq) représentatif dudit second canal sélectionné (Uy),
le premier dispositif (A1) scrute les canaux de ladite seconde série de canaux (Vm) et, après réception dudit second signal de sélection (Sq), installe son émetteur sur ledit second canal sélectionné (Uy),
et après quoi, les dispositifs se transmettent entre eux lesdits signaux d'origine sur lesdits canaux sélectionnés (Vx, Uy).

2. Procédé selon la revendication 1, **caractérisé par le fait que** le premier dispositif (A1) est apte à émettre ledit premier signal de sélection sur deux autres canaux (Ua, Ub) et que le second dispositif est apte à revoir ce premier signal de sélection sur ces deux autres canaux.

3. Procédé selon l'une des revendications 1 et 2, **caractérisé par le fait que** lesdits dispositifs effectuent lesdites opérations après avoir été activés par un moyen d'activation (31, 32).

4. Procédé d'échange de signaux d'origine ou en bande de base, en particulier des signaux audio ou sonores, entre un premier dispositif (A1) d'émission et de réception et un second dispositif (A2) d'émission et de réception, dans lequel le premier dispositif (A1) comprend un moyen d'activation d'un signal d'appel, notamment selon l'une quelconque des revendications 1 à 3, **caractérisé par le fait que**, pour la transmission de signaux d'origine du premier dispositif au second dispositif, respectivement du second dispositif au premier dispositif :
le premier dispositif, respectivement le second dispositif,
- génère un signal de service de forme déterminée dans une seconde bande de fréquence au moins en partie disjointe de ladite première bande,
- combine, en particulier par addition, lesdits signaux d'origine avec ledit signal de service,
- et émet le signal mélangé dans ledit canal sélectionné (Uy),
que le second dispositif, respectivement le premier dispositif,
- démodule les signaux reçus dans ce canal sélectionné (Uy) et filtre les signaux démodulés de façon à en extraire un signal principal contenu dans ladite première bande de fréquence pour le délivrer et à en extraire un signal secondaire contenu dans ladite seconde bande de fréquence,
- compare ce signal secondaire à un signal de référence (Sr) correspondant audit signal de service et génère un ordre de sélection au cas où ledit signal secondaire est au moins en partie différent dudit signal de référence (Sr),
que, sous l'effet dudit ordre de sélection, ledit second dispositif, respectivement le premier dispositif, sélectionne un autre canal de ladite première série de canaux (Un), installe son récepteur sur cet autre canal et transmet un signal de changement représentatif de cet autre canal,
et que ledit premier dispositif, respectivement le second dispositif, recevant ce signal de changement, installe son émetteur sur cet autre canal nouvellement sélectionné de façon à émettre alors ledit signal mélangé sur cet autre canal.

5. Procédé selon la revendication 4, **caractérisé par le fait qu** lesdites première et seconde bandes de fréquence sont de préférence séparées.

6. Procédé selon l'une des revendications 4 et 5, **caractérisé par le fait qu'**il consiste :
- à mesurer l'intensité du champ électromagnétique dans au moins certains desdits canaux de transmission radioélectrique,
- à comparer les valeurs de ces intensités, ,
- et à sélectionner en tant qu'autre canal de transmission celui la valeur du champ électromagnétique est la plus faible.

7. Procédé selon l'une quelconque des revendications 4 à 6, **caractérisé par le fait qu'**il consiste à délivrer ledit ordre de sélection au cas où ledit signal secondaire est au moins en partie différent dudit signal de référence (Sr) pendant une durée prédéterminée.

8. Procédé selon l'une quelconque des revendications précédentes, **caractérisé par le fait que** lesdit signaux d'origine sont des signaux audio et ledit signal de service est un signal subsonique.

9. Procédé selon l'une quelconque des revendications précédentes, **caractérisé par le fait que** ledit signal de service est un signal périodique, en particulier sinusoïdal.

10. Système de transmission de signaux d'origine, en particulier des signaux audio ou sonores, générés dans une première bande de fréquence, entre un premier dispositif d'émission et de réception de signaux radioélectriques et un second dispositif d'émission et de réception de signaux radioélectriques, notamment pour la mise en oeuvre du procédé selon l'une quelconque des revendications précédentes, **caractérisé par le fait que** lesdits premier et second dispositifs d'émission et de réception (1) comprennent respectivement
- des moyens (9) pour émettre des signaux dans respectivement plusieurs canaux de transmission radioélectrique,
- des moyens (18) pour recevoir des signaux dans respectivement lesdits canaux de transmission radioélectrique,
- des moyens (4) pour sélectionner un canal d'émission et un canal de réception différents, correspondant à deux canaux de transmission radioélectrique différents entre les dispositifs d'émission et de réception,
- des moyens (8) pour générer dans une seconde bande de fréquence au moins en partie disjointe de ladite première bande de fréquence un signal de service de forme déterminée,
- des moyens (7) pour combiner les signaux d'origine avec ledit signal de service et délivrer le signal mélangé à transmettre auxdits moyens d'émission,
- des moyens (24) pour démoduler les signaux reçus par lesdits moyens de réception (18),
- des moyens (26, 29) pour filtrer les signaux démodulés de façon à en extraire un signal principal contenu dans ladite bande de fréquence pour le restituer à l'utilisateur et à en extraire un signal secondaire contenu dans ladite seconde bande de fréquence,
- des moyens (4) pour comparer le signal secondaire à un signal de référence (Sr) correspondant audit signal de service,
- et des moyens (4) pour délivrer un ordre de sélection de canal de transmission auxdits moyens de sélection au cas où ledit signal secondaire est au moins en partie différent dudit signal de référence (Sr).

11. Système selon la revendication 10, **caractérisé par le fait qu'**il comprend des moyens (25) pour mesurer l'intensité du champ électromagnétique dans au moins certains desdits canaux de transmission radioélectrique, et des moyens (4) pour comparer les valeurs de ces intensités et délivrer un ordre de sélection du canal de transmission dont la valeur du champ électromagnétique est la plus faible.

12. Système selon l'une des revendications 10 et 11, **caractérisé par le fait qu'**il comprend un microphone (27) relié auxdits moyens de mélangeage et un haut-parleur relié auxdits moyens de filtrage pour restituer ledit signal principal.

13. Système selon l'une quelconque des revendications 10 à 12, **caractérisé par le fait qu'**il comprend des moyens (4) pour délivrer un ordre de sélection de canal de transmission auxdits moyens de sélection au cas où ledit signal secondaire est différent dudit signal de référence (Sr) selon un écart déterminé et pendant une durée déterminée.

## Claims

1. Method of exchanging original or baseband signals, in particular audio or sound signals, between a first sending and receiving device (A1) and a second sending and receiving device (A2), in which the first device (A1) comprises a means of activating a call signal,
this first device (A1) being able to send signals selectively in a first series of radiofrequency transmission channels (Un) and at least one other predetermined channel (Ua) and to receive signals selectively in a second series of radiofrequency transmission channels (Vm) and the second device (A2) being able to send signals selectively in said second series of channels (Vm) and to receive signals selectively in said first series of channels (Un) and in said predetermined channel (Ua)
the first device (A1), after having been activated by said activation means:
- measures, the signal strength of the electromagnetic field in the channels of said second series of channels (Vm),
- compares the values of these signal strengths, selects the first channel (Vx) in which the value of the electromagnetic field is the lowest,
- installs its receiver on this first transmission channel (Vx),
- and sends respectively in said predetermined channel (Ua) a first selection signal (Sp) comprising said call signal and a signal representative of said first selected channel (Vx),
the second device (A2) scans said predetermined channel (Ua) and, after receiving said first selection signal (Sp),
- installs its sender on said first selected channel (Vx), measures the signal strength of the electromagnetic field in the channels of said first series of channels (Un),
- compares the values of these signal strengths,
- selects the second channel (Uy) in which the value of the electromagnetic field is the lowest and installs its receiver on this selected channel (Uy),
- and sends in said selected radiofrequency channel (Vx) a second selection signal (Sq) representative of said second selected channel (Uy),
the first device (A1) scans the channels of said second series of channels (Vm) and, after receiving said second selection signal (Sq), installs its sender on said second selected channel (Uy),
and after which the devices transmit between themselves said original signals on said selected channels (Vx, Uy).

2. Method according to Claim 1, **characterized in that** the first device (A1) is able to send said first selection signal on two other channels (Ua, Ub) and that the second device is able to receive this first selection signal on these two other channels.

3. Method according to one of Claims 1 to 2, **characterized in that** said devices carry out said operations after having been activated by an activation means (31, 32).

4. Method of exchanging original or baseband signals, in particular audio or sound signals, between a first sending and receiving device (A1) and a second sending and receiving device (A2), in which the first device (A1) comprises a means of activating a call signal, notably according to any one of Claims 1 to 3, **characterized in that**, for the transmission of original signals from the first device to the second device, respectively from the second device to the first device:
the first device, respectively the second device,
- generates a service signal of determined form in a second frequency band at least partly separate from said first band,
- combines, in particular by addition, said original signals with said service signal,
- and sends the mixed signal in said selected channel (Uy),
that the second device, respectively the first device,
- demodulates the received signals in this selected channel (Uy) and filters the demodulated signals so as to extract from them a main signal contained in said first frequency band to deliver it and extract from it a secondary signal contained in said second frequency band,
- compares this secondary signal to a reference signal (Sr) corresponding to said service signal and
generates a selection command in the case where said secondary signal is at least partly different from said reference signal (Sr),
that, under the effect of said selection command, said second device, respectively the first device, selects another channel from said first series of channels (Un), installs its receiver on this other channel and transmits a change signal representative of this other channel,
and that said first device, respectively the second device, receiving this change signal, installs its sender on this other newly selected channel so as to then send said mixed signal on this other channel.

5. Method according to Claim 4, **characterized in that** said first and second frequency bands are preferably separate.

6. Method according to one of Claims 4 and 5, **characterized in that** it consists:
- in measuring the signal strength of the electromagnetic field in at least some of said radiofrequency transmission channels,
- in comparing the values of these signal strengths,
- and in selecting as the other transmission channel the one with the lowest electromagnetic field value.

7. Method according to any one of Claims 4 to 6, **characterized in that** it consists in delivering said selection command in the case where said secondary signal is at least partly different from said reference signal (Sr) for a predetermined time.

8. Method according to any one of the preceding claims, **characterized in that** said original signals are audio signals and said service signal is a subsonic signal.

9. Method according to any one of the preceding claims, **characterized in that** said service signal is a periodic signal, in particular sinusoidal.

10. System for transmitting original signals, in particular audio or sound signals, generated in a first frequency band, between a first device for sending and receiving radiofrequency signals and a second device for sending and receiving radiofrequency signals, notably to implement the method according to any one of the preceding claims, **characterized in that** said first and second sending and receiving devices (1) respectively comprise
- means (9) for sending signals respectively in several radiofrequency transmission channels,
- means (18) for receiving signals respectively in said radiofrequency transmission channels,
- means (4) for selecting a sending channel and a receiving channel that are different, corresponding to two different radiofrequency transmission channels between the sending and receiving devices,
- means (8) for generating, in a second frequency band at least partly separate from said first frequency band, a service signal of determined form,
- means (7) for combining the original signals with said service signal and delivering the mixed signal to be transmitted to said sending means,
- means (24) for demodulating the signals received by said reception means (18),
- means (26, 29) for filtering the demodulated signals to extract from them a main signal contained in said frequency band to restore it to the user and extract from it a secondary signal contained in said second frequency band,
- means (4) for comparing the secondary signal to a reference signal (Sr) corresponding to said service signal,
- and means (4) for delivering a transmission channel selection command to said selection means in the case where said secondary signal is at least partly different from said reference signal (Sr).

11. System according to Claim 10, **characterized in that** it comprises means (25) for measuring the signal strength of the electromagnetic field in at least some of said radiofrequency transmission channels, and means (4) for comparing the values of these signal strengths and delivering a selection command for the transmission channel with the lowest electromagnetic field value.

12. System according to one of Claims 10 and 11, **characterized in that** it comprises a microphone (27) linked to said mixing means and a loudspeaker linked to said filtering means to restore said main signal.

13. System according to any one of Claims 10 to 12, **characterized in that** it comprises means (4) for delivering a transmission channel selection command to said selection means in the case where said secondary signal is different from said reference signal (Sr) by a determined difference and for a determined time.

## Patentansprüche

1. Verfahren zum Austauschen von Anfangs- oder Basisbandsignalen, insbesondere Audio- oder Schallsignalen, zwischen einer ersten Sende- und Empfangsvorrichtung (A1) und einer zweiten Sende- und Empfangsvorrichtung (A2), wobei die erste Vorrichtung (A1) eine Aktivierungseinrichtung für ein Rufsignal aufweist,
wobei diese erste Vorrichtung (A1) in der Lage ist, Signale selektiv in einem ersten Satz von Funkübertragungskanälen (Un) und mindestens einem anderen vorgegebenen Kanal (Ua) zu senden und Signale selektiv in einem zweiten Satz von Funkübertragungskanälen (Vm) zu empfangen, und wobei die zweite Vorrichtung (A2) in der Lage ist, Signale selektiv in dem zweiten Satz von Kanälen (Vm) zu senden und Signale selektiv in dem ersten Satz von Kanälen (Un) und in dem vorgegebenen Kanal (Ua) zu empfangen,
die erste Vorrichtung (A1), nachdem sie von der Aktivierungseinrichtung aktiviert worden ist,
- die Intensität des elektromagnetischen Felds in den Kanälen des zweite Satzes von Kanälen (Vm) mißt,
- die Werte dieser Intensitäten vergleicht, den ersten Kanal (Vx) auswählt, in welchem der Wert des elektromagnetischen Felds am kleinsten ist,
- ihren Empfänger auf diesen ersten Übertragungskanal (Vx) legt,
- und jeweils in dem vorgegebenen Kanal (Ua) ein erstes Auswahlsignal (Sp) sendet, das das Rufsignal und ein den ersten ausgewählten Kanal (Vx) repräsentierendes Signal aufweist,
die zweite Vorrichtung (A2) den vorgegebenen Kanal (Ua) durchsucht und nach Empfang des ersten Auswahlsignals (Sp)
- ihren Sender auf den ersten ausgewählten Kanal (Vx) legt, die Intensität des elektromagnetischen Felds in den Kanälen des ersten Satzes von Kanälen (Un) mißt,
- die Werte dieser Intensitäten vergleicht,
- den zweiten Kanal (Uy) auswählt, in welchem der Wert des elektromagnetischen Felds am kleinsten ist, und ihren Empfänger auf diesen ausgewählten Kanal (Uy) legt,
- und in dem ausgewählten Funkkanal (Vx) ein zweites Auswahlsignal (Sq) sendet, das den zweiten ausgewählten Kanal (Uy) repräsentiert,
die erste Vorrichtung (A1) die Kanäle des zweiten Satzes von Kanälen (Vm) durchsucht und nach Empfang des zweiten Auswahlsignals (Sq) ihren Sender auf diesen zweiten ausgewählten Kanal (Uy) legt,
und danach die Vorrichtungen die Anfangssignale auf den ausgewählten Kanälen (Vx,Uy) zwischen sich übertragen.

2. Verfahren nach Anspruch 1, **dadurch gekennzeichnet, daß** die erste Vorrichtung (A1) in der Lage ist, das erste Auswahlsignal auf zwei anderen Kanälen (Ua,Ub) zu übertragen, und **dadurch**, daß die zweite Vorrichtung in der Lage ist, dieses erste Auswahlsignal auf diesen zwei anderen Kanälen zu empfangen.

3. Verfahren nach einem der Ansprüche 1 und 2, **dadurch gekennzeichnet, daß** die Vorrichtungen die Operationen durchführen, nachdem sie von einer Aktivierungseinrichtung (31,32) aktiviert worden sind.

4. Verfahren zum Austauschen von Anfangs- oder Basisbandsignalen, insbesondere Audio- oder Schallsignalen, zwischen einer ersten Sende- und Empfangsvorrichtung (A1) und einer zweiten Sende- und Empfangsvorrichtung (A2), wobei die erste Vorrichtung (A1) eine Aktivierungseinrichtung für ein Rufsignal aufweist, insbesondere nach einem der Ansprüche 1 bis 3, **dadurch gekennzeichnet, daß** für die Übertragung von Anfangssignalen von der ersten Vorrichtung zu der zweiten Vorrichtung bzw. von der zweiten Vorrichtung zu der ersten Vorrichtung
die erste Vorrichtung bzw. die zweite Vorrichtung
- ein Dienstsignal einer vorgegebenen Form in einem zu dem ersten Band zumindest teilweise separaten zweiten Frequenzband erzeugt,
- die zwei Anfangssignale mit dem Dienstsignal kombiniert, insbesondere durch Addition,
- und das gemischte Signal in dem ausgewählten Kanal (Uy) sendet,
**dadurch**, daß die zweite Vorrichtung bzw. die erste Vorrichtung
- die in diesem ausgewählten Kanal (Uy) empfangenen Signale demoduliert und die demodulierten Signale filtert, derart, um daraus ein in dem ersten Frequenzband enthaltenes Hauptsignal zu extrahieren, um es auszugeben, und um daraus ein in dem zweiten Frequenzband enthaltenes sekundäres Signal zu extrahieren,
- dieses sekundäre Signal mit einem Referenzsignal (Sr), das dem Dienstsignal entspricht, vergleicht und einen Auswahlbefehl erzeugt, für den Fall, daß sich das sekundäre Signal zumindest teilweise von dem Referenzsignal (Sr) unterscheidet,
**dadurch**, daß unter der Wirkung des Auswahlbefehls die zweite Vorrichtung bzw. die erste Vorrichtung einen anderen Kanal aus dem ersten Satz von Kanälen (Un) auswählt, ihren Empfänger auf diesen anderen Kanal legt und ein diesen anderen Kanal repräsentierendes Änderungssignal überträgt,
und **dadurch**, daß die dieses Änderungssignal empfangende erste Vorrichtung bzw. zweite Vorrichtung ihren Sender auf diesen neu ausgewählten Kanal legt, um dann das gemischte Signal auf diesem anderen Kanal zu senden.

5. Verfahren nach Anspruch 4, **dadurch gekennzeichnet, daß** das erste und das zweite Frequenzband vorzugsweise voneinander getrennt sind.

6. Verfahren nach einem der Ansprüche 4 und 5, **dadurch gekennzeichnet, daß** es darin besteht,
- die Intensität des elektromagnetischen Felds in mindestens einigen der Funkübertragungskanäle zu messen,
- die Werte dieser Intensitäten zu vergleichen,
- und als anderen Übertragungskanal denjenigen auszuwählen, dessen Wert des elektromagnetischen Felds am kleinsten ist.

7. Verfahren nach einem der Ansprüche 4 bis 6, **dadurch gekennzeichnet, daß** es darin besteht, den Auswahlbefehl auszugeben, für den Fall, daß sich während einer vorgegebenen Dauer das sekundäre Signal zumindest teilweise von dem Referenzsignal (Sr) unterscheidet.

8. Verfahren nach einem der vorstehenden Ansprüche, **dadurch gekennzeichnet, daß** die Anfangssignale Audiosignale sind und das Dienstsignal ein Ultraschallsignal ist.

9. Verfahren nach einem der vorstehenden Ansprüche, **dadurch gekennzeichnet, daß** das Dienstsignal ein periodisches, insbesondere sinusförmiges, Signal ist.

10. System zum Übertragen von in einem ersten Frequenzband erzeugten Anfangssignalen, insbesondere Audio- oder Schallsignalen, zwischen einer ersten Sende- und Empfangsvorrichtung für Funksignale und einer zweiten Sende- und Empfangsvorrichtung für Funksignale, insbesondere zur Durchführung des Verfahrens nach einem der vorstehenden Ansprüche, **dadurch gekennzeichnet, daß** die erste und die zweite Sende- und Empfangsvorrichtung (1) jeweils aufweisen:
- Einrichtungen (9) zum Senden von Signalen in jeweils mehreren Funkübertragungskanälen,
- Einrichtungen (18) zum Empfangen von Signalen in jeweils den Funkübertragungskanälen,
- Einrichtungen (4) zum Auswählen eines Sendekanals und eines dazu separaten Empfangskanals, die zwei unterschiedlichen Funkübertragungskanälen zur Funkübertragung zwischen den Sendeund Empfangseinrichtungen entsprechen,
- Einrichtungen (8) zum Erzeugen eines Dienstsignals einer vorgegebenen Form in einem zu dem ersten Frequenzband zumindest teilweise separaten zweiten Frequenzband,
- Einrichtungen (7) zum Kombinieren der Anfangssignale mit dem Dienstsignal und zur Ausgabe des zu übertragenden gemischten Signals zu den Sendeeinrichtungen,
- Einrichtungen (24) zum Demodulieren der von den Empfangseinrichtungen (18) empfangenen Signale,
- Einrichtungen (26, 29) zum Filtern der demodulierten Signale, um daraus ein in dem Frequenzband enthaltenes Hauptsignal zu extrahieren, um es für den Benutzer wiederzugeben, und um daraus ein in dem zweiten Frequenzband enthaltenes sekundäres Signal zu extrahieren,
- Einrichtungen (4) zum Vergleichen des sekundären Signals mit einem Referenzsignal (Sr), das dem Dienstsignal entspricht,
- und Einrichtungen (4) zur Ausgabe eines Übertragungskanal-Auswahlbefehls zu den Auswahleinrichtungen, für den Fall, daß sich das sekundäre Signal zumindest teilweise von dem Referenzsignal (Sr) unterscheidet.

11. System nach Anspruch 10, **dadurch gekennzeichnet, daß** es aufweist: Einrichtungen (25) zum Messen der Intensität des elektromagnetischen Felds in mindestens einigen der Funkübertragungskanäle und Einrichtungen (4) zum Vergleichen der Werte dieser Intensitäten und zur Ausgabe eines Auswahlbefehls für den Übertragungskanal, dessen Wert des elektromagnetischen Felds am kleinsten ist.

12. System nach einem der Ansprüche 10 und 11, **dadurch gekennzeichnet, daß** es ein mit dem Mischeinrichtungen verbundenes Mikrophon (27) und einen mit den Filtereinrichtungen verbundenen Lautsprecher zur Wiedergabe des Hauptsignals aufweist.

13. System nach einem der Ansprüche 10 bis 12, **dadurch gekennzeichnet, daß** es Einrichtungen (4) aufweist, um einen Übertragungskanal-Auswahlbefehl zu den Auswahleinrichtungen auszugeben, für den Fall, daß sich das sekundäre Signal gemäß einem vorgegebenen Abstand und während einer vorgegebenen Dauer von dem Referenzsignal (Sr) unterscheidet.
